(19) **Europäisches Patentamt European Patent Office Office européen des brevets**

(11) **EP 4 591 972 A1**

(12) **EUROPEAN PATENT APPLICATION**
published in accordance with Art. 153(4) EPC

(43) Date of publication:
30.07.2025 Bulletin 2025/31

(51) International Patent Classification (IPC):
*B01J 8/06* (2006.01)   *B01J 8/00* (2006.01)
*B01J 19/00* (2006.01)   *C01B 3/38* (2006.01)

(21) Application number: 23883182.0

(22) Date of filing: 27.10.2023

(52) Cooperative Patent Classification (CPC):
B01J 8/00; B01J 8/06; B01J 19/00; C01B 3/38

(86) International application number:
PCT/KR2023/016923

(87) International publication number:
WO 2024/091078 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.10.2022  KR 20220140787

(71) Applicant: LG CHEM, LTD.
Seoul 07336 (KR)

(72) Inventors:
• CHOI, Jun Won
  Daejeon 34122 (KR)
• KIM, Hyoung Jae
  Daejeon 34122 (KR)
• CHOI, A Young
  Daejeon 34122 (KR)
• IM, Ye Hoon
  Daejeon 34122 (KR)

(74) Representative: Plasseraud IP
104 Rue de Richelieu
CS92104
75080 Paris Cedex 02 (FR)

(54) **REACTION APPARATUS**

(57) [Summary]
This specification discloses a reaction device, a reaction method using the reaction device, and a use of the reaction device. The reaction device can solve a coking problem capable of occurring in a process of producing syngas even without applying a method, with high cost and high energy consumption, of introducing an excessive amount of water vapor or carbon dioxide. The reaction device can achieve the above object even in a DRM process without applying water vapor. This specification also discloses a reaction method using the reaction device, and a use of the reaction device.

[Fig. 1]

**Description**

**Technical Field**

This application claims priority to Korean Patent Application No. 10-2022-0140787 dated October 27, 2022, the disclosure of which is incorporated herein by reference in its entirety.

This specification discloses a reaction device, a reaction method using the reaction device, and a use of the reaction device.

**Background Art**

Syngas is known in the industry as a mixed gas containing hydrogen ($H_2$) and carbon monoxide (CO). This syngas can usually be produced using coal, heavy oil, naphtha and/or natural gas, and the like as raw materials, and for example, the syngas can be produced by reforming natural gas.

As a process of obtaining syngas from natural gas, an SMR (Steam Methane Reforming) process and a CDR (Carbon Dioxide Reforming) process are typically known. Because the CDR process does not use steam, unlike the SMR process, it is also called a DRM (Dry Reforming of Methane) process.

The key reaction of the SMR process is as shown in Scheme 1 below, and the key reaction of the DRM process is as shown in Scheme 2 below, and both reactions are so-called endothermic reactions.

$$[Scheme\ 1] \qquad CH_4+H_2O\rightarrow_3H2+CO,\ \Delta H=206.28\ kJ/mol$$

$$[Scheme\ 2] \qquad CH_4+CO_2\rightarrow 2H_2+2CO,\ \Delta H=247.44\ kJ/mol$$

In the SMR process and the DRM process, catalysts are generally used.

However, while the raw materials (natural gas, etc.) are reformed during the reaction processes, carbon residues called coke are generated, and this coke causes a problem in which the activity of the catalyst decreases, where such a problem is called coking.

There are a variety of causes to cause coking, including the so-called Boudouard reaction.

The Boudouard reaction is a reaction in which carbon monoxide generated during the reaction process dissociates at a relatively low temperature to form coke, where this process is as shown in Scheme 3 below. It is known that this reaction usually occurs below about 700°C.

$$[Scheme\ 3] \qquad 2CO(g)\rightarrow C(s)+CO_2(g)$$

Both the SMR process and the DRM process are endothermic reactions, where if a region with a relatively fast reaction rate exists in the reaction section, the temperature of the relevant region drops compared to the surrounding temperature, whereby the Boudouard reaction can be promoted in such a region. In this way, the region where the temperature drops compared to the surrounding temperature is also called a cold spot.

Typically, when the cold spot is passed within the reaction section, the reaction rate tends to decrease, the heat applied in the region where the reaction rate is reduced can decompose the reaction target material or raw material, and this decomposition can also cause the coking phenomenon. For example, methane ($CH_4$) as a raw material can produce coke according to Scheme 4 below at a high temperature of about 850°C or more.

$$[Scheme\ 4] \qquad CH_4\text{-}C(s)+2H_2(g)$$

Non-Patent Document 1 discloses the content of preventing coking through a method such as introducing an excessive amount of steam in the SMR process.

The DRM process is classified as a carbon capture technology because it uses carbon dioxide as the material, but because of using no water vapor, the coking cannot be prevented by a method of introducing water vapor.

Non-Patent Document 2 discloses the content of preventing coking by applying an excessive amount of carbon dioxide in the DRM process. However, the method disclosed in Non-Patent Document 2 is a method with high energy consumption and high cost.

[Prior Art Documents]

[Non-Patent Documents]

(Non-Patent Document 1) Bak, Y.C. and Cho K.J., "Status for the Technology of Hydrogen Production from Natural Gas," Korean Chem. Eng. Res., Vol. 43, No. 3, June, 2005, pp. 344-351

(Non-Patent Document 2) Armor, J. N., "The Multiple Roles for Catalysis in the Production of H2," Applied Catalysis, A: General, 176, 159-176 (1999).

## Detailed Description of the Invention

### Technical Problem

This specification discloses a reaction device, a reaction method using the reaction device, and a use of the reaction device. It is an object of the present specification to disclose a reaction device capable of solving a coking problem that may occur in a process of producing syngas even without applying a method, with high cost and high energy consumption, of introducing an excessive amount of water vapor or carbon dioxide.

It is an object of the present specification to disclose a reaction device capable of achieving the above object without using a method with high cost and high energy consumption even in a DRM process without applying water vapor.

It is an object of the present specification to disclose a reaction method using the reaction device, and a use of the reaction device.

### Technical Solution

Among the physical properties mentioned in this specification, the physical property in which the measurement temperature affects the results is a physical property measured at room temperature, unless otherwise specified.

The room temperature means a natural temperature without warming or cooling. For example, the room temperature may be any one temperature within a range of 10°C to 30°C, and may be a temperature of about 23°C or about 25°C or so. The unit of temperature mentioned in this specification is Celsius (°C), unless otherwise specified.

The temperature of the pipeline, internal passage, catalyst section or non-catalyst section, or the internal temperature of the pipeline, internal passage, catalyst section or non-catalyst section as mentioned in this specification means the center temperature of the pipeline, internal passage, catalyst section or non-catalyst section, unless otherwise specified.

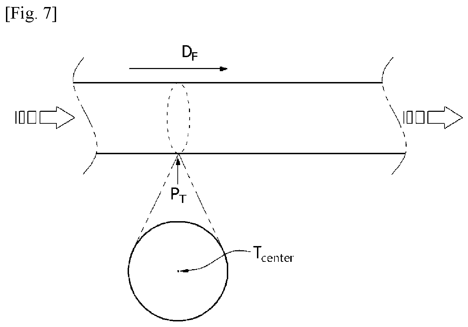

The center temperature is the temperature at the gravity center of the cross section of the pipeline, internal passage, catalyst section or non-catalyst section. For example, referring to Fig. 7, the center temperature of the pipeline is indicated as $T_{Center}$. Referring to Fig. 7, the gravity center of the cross section of the pipeline (100) can be confirmed at the specific point ($P_T$) of the pipeline (100), and the temperature $T_{Center}$ measured at the gravity center can be referred to as the center temperature at the specific point ($P_T$).

Among the physical properties mentioned in this specification, the physical property in which the measurement pressure affects the results is a physical property measured at normal pressure, unless otherwise specified.

The term normal pressure means a natural pressure without pressurization and depressurization. For example, the normal pressure may usually mean about 1 atm or so in a level of atmospheric pressure.

Unless otherwise specified, the thermodynamic properties mentioned in this specification are the results measured at 25°C and 1 atm.

Among the physical properties mentioned in this specification, the physical property in which the measurement humidity affects the results is a physical property measured at the standard-state humidity, unless otherwise specified.

The standard-state humidity is usually a relative humidity, which means a humidity of about 60% to 65% or so.

Among the terms used in this specification, the term "a to b" designating a range means a range between a and b, including the lower limit of a and the upper limit of b.

This specification discloses a reaction device. The term reaction device means a device capable of performing any reaction. In one example, the reaction may include an endothermic reaction. In one example, the reaction may be a reaction in the SMR (Steam Methane Reforming) process, or may be at least some reactions in the SMR (Steam Methane Reforming) process. In another example, the reaction may be a reaction in the DMR (Dry Reforming of Methane) process, or may be at least some reactions in the DMR (Dry Reforming of Methane) process.

The reaction device may be a syngas production device, or may be a part of the syngas production device. Such a syngas production device may be a device in which the DMR (Dry Reforming of Methane) process is performed in processes.

Hereinafter, the reaction device, and the like will be described with reference to the drawings according to Examples, but the scope of the reaction device, and the like is not limited to the following.

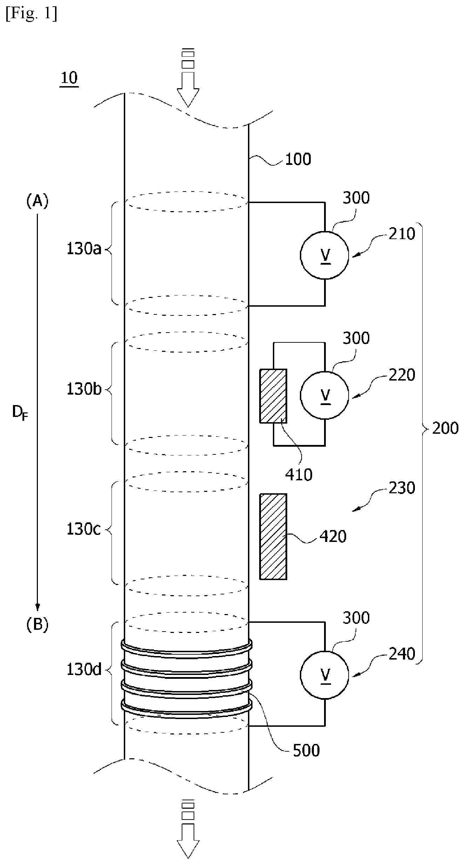

Fig. 1 is an illustration diagram of an exemplary reaction device (10).

The reaction device (10) may comprise at least one pipeline (100). In the pipeline (100), an internal passage formed so that a fluid is capable of flowing therethrough may be included. The shape of the pipeline (100) is not particularly limited, which may be designed by appropriately considering the physical and/or chemical properties, and the like of the fluid which is a target for the reaction.

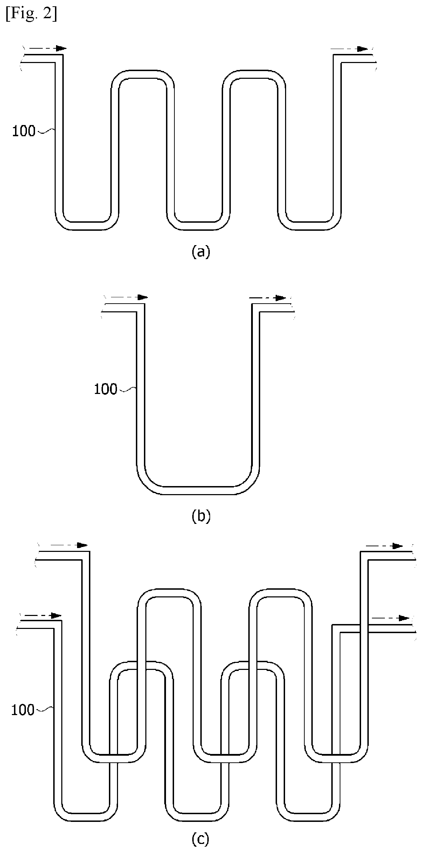

Fig. 2 is exemplary shapes of the pipeline (100) of the reaction device (10). The reaction device (10) in Fig. 1 comprises a pipeline (100) formed in a straight line. Such a pipeline (100) has a shape that U-shapes are repeatedly equipped, as shown in Fig. 2(a), or is a U-shape, as shown in Fig. 2(b), or may also be in a shape that the shapes, in which U-shaped pipe lines (100) are repeatedly equipped, are arranged to be misaligned so that they do not overlap each other, as shown in Fig. 2(c).

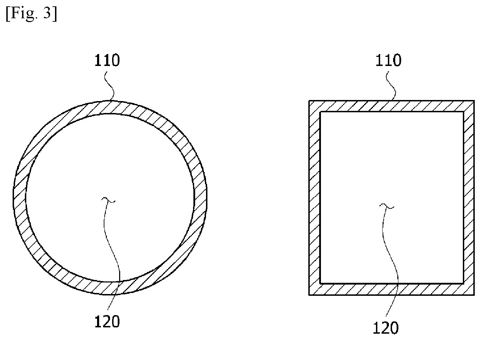

The cross-sectional shape of the pipeline (100) is not particularly limited. The cross-sectional shape of the pipeline (100) may be appropriately designed in consideration of the physical and/or chemical properties of the fluid which is a reaction target. Fig. 3 is exemplary shapes of cross sections of pipelines (100). The pipeline may have a surface forming the internal passage. Fig. 3 is shapes of cross sections of pipelines having the surface (110) and the internal passage (120). As in Fig. 3, the cross section of the pipeline may generally be circular or quadrangular. In addition to this, the shape of the cross section may be various shapes such as a triangle, diamond, parallelogram, or oval.

The internal passage of the pipeline may be a space formed so that a fluid is capable of flowing. The surface (110 in Fig. 3) of the pipeline may also serve as a medium transferring heat energy to the internal passage by a heating unit to be described below. In this case, the surface may be formed of a material having an appropriate thermal conductivity and high durability against heat. The surface may be of a material that generates so-called resistance heat or Joule heat when an electric current flows. Such a material may typically be an alloy containing nickel and chromium, but is not limited thereto.

The pipeline (100) of the reaction device (10) may have an appropriate length in consideration of the physical and/or chemical properties of the fluid which is a target for a reaction.

In the reaction device (10), the internal passage (120) of the pipeline (100) may be formed to allow a fluid to flow along any one direction. For example, the pipeline may be formed so that the fluid is flowable in one direction by gravity, or the reaction device may be formed to be capable of forming a fluid stream by an external force, such as a pump, where both the gravity and the external force may also be applied.

The reaction device may comprise a plurality of heating units. The heating unit may be included in the reaction device to be capable of transferring heat energy from at least a portion of the pipeline to a fluid flowing through the internal passage.

Such a plurality of heating units may be installed to be each independently capable of transferring heat energy to the internal passage. That is, at least some of the plurality of heating units are installed to independently determine the amount of heat transferred to the internal passage without being influenced by other heating units.

Accordingly, the pipeline (100) of the reaction device (10) may be divided into two or more plural heating regions along a fluid stream direction ($D_F$).

In this specification, the term fluid stream direction ($D_F$) is the fluid stream direction in the internal passage (120) of the pipeline (100). The pipeline in Fig. 1 is configured so that a fluid flows from an (A) point to a (B) point, where the direction from the (A) point toward the (B) point is the fluid stream direction ($D_F$).

In this specification, the term fluid is a flowable substance, which is a general term for gas, liquid, plasma, and the like.

In the DRM process, the fluid may comprise at least carbon dioxide.

The fluid may also comprise at least an organic hydrocarbon compound. In this specification, the term organic hydrocarbon compound is a hydrocarbon, or a compound that at least some of the carbon atoms of the hydrocarbon are substituted with oxygen (O), nitrogen (N), sulfur (S) and/or halogen (F, Cl, Br and/or I), and the like, or at least some of the carbon atoms of the hydrocarbon are bonded to the oxygen (O), nitrogen (N), sulfur (S) and/or halogen (F, Cl, Br and/or I). An example of the organic hydrocarbon compound includes methane, ethane, and propane, and the like, but is not limited thereto. In the DRM process, the organic hydrocarbon compound may comprise, for example, at least some of the compounds forming natural gas, and may especially comprise methane ($CH_4$). The fluid may be a reaction target material to react by receiving heat energy from the heating unit, or may comprise the same. For example, if the fluid contains carbon dioxide and an organic hydrocarbon compound, they can react. Through this reaction, so-called syngas containing hydrogen and carbon monoxide can be produced.

The fluid applied in the DRM process may be substantially free of water (e.g., steam). The steam means water vapor in the vapor form of water ($H_2O$). Here, the matter that water is not substantially included in the fluid means that the water is not intentionally present in the fluid, and for example, even if a small amount of water is naturally included, in the case where the content is below a certain level, it can be regarded as being substantially free of water.

For example, the upper limit of the water content in the fluid may be 10 weight%, 9 weight%, 8 weight%, 7 weight%, 6 weight%, 5 weight%, 4 weight%, 3 weight%, 2 weight%, 1 weight%, 0.5 weight%, 0.1 weight%, 0.05 weight%, 0.01 weight%, 0.005 weight%, 0.001 weight%, or 0.0001 weight% or so, based on the total weight of the fluid, and the lower limit thereof may be 0 weight% or so. The water content may be within a range of equal to or less than, or less than any one of the above-described upper limits; or within a range of equal to or more than, or more than the above-described lower limit while being equal to or less than, or less than any one of the above-described upper limits. The fluid may also be substantially free of water in solid and liquid forms, such as ice or liquid water.

In Fig. 1, a plurality of heating regions (130) formed by the plurality of heating units is indicated. The heating region is a region to receive heat energy by the heating unit. The heating unit may transfer heat energy to the heating region (130) in a conduction, convection and/or radiation manner.

The reaction device (10) in Fig. 1 comprises two or more plural heating regions (130a, 130b, 130c, 130d) formed by the plurality of heating units (200, 210, 220, 230, 240). The amount of heat energy received by the respective heating regions (130) may be independently determined by the plurality of heating units (200).

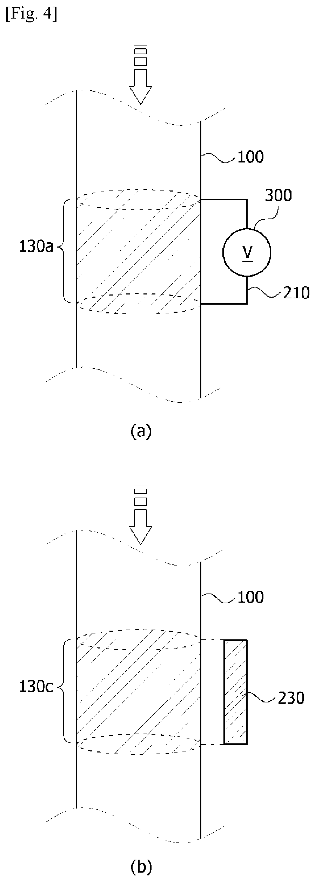

For example, the heating region (130) may be a region that directly receives heat energy from the heating unit (200). Such a region i) may be, in a case where the heating unit (200) is a part of the pipeline (100), the internal passage (120) of the relevant pipeline (100), and ii) may be, in a case where the heating unit (200) is an external heat source provided while being spaced apart from the pipeline (100), the internal passage (120) of a partial region of the pipeline (10) located at the shortest distance from the external heat source. Fig. 4 is illustration diagrams of a pipeline (100) for explaining a heating region (130). Referring to Fig. 4(a), if the heating unit (200) is a part of the pipeline (100) (the surface of the pipeline) that generates so-called resistance heat or Joule heat by energization, the internal passage (120) of the pipeline (100) generating the resistance heat or Joule heat may be the heating region (130a). Referring to Fig. 4(b), if the heating unit (200) is an external heat source (230) spaced apart from the pipeline (100), the internal passage (120) of the pipeline (10) at the shortest distance (i.e., vertical distance in Fig. 4(b)) from the external heat source may be the heating region (130c). Referring to Fig. 1, an example of the heating regions (130a, 130b, 130c, 130d) generated corresponding to the respective heating units (200) can further be confirmed.

The internal passage (120) of the exemplary reaction device (10) may comprise a non-heating region. When the pipeline (100) is divided into two or more heating regions (130) by the plurality of heating units, the region which does not correspond to the heating region (130), that is, the region of the inertial passage (120) which does not substantially receive heat energy from the heating unit (200) may be a non-heating region. However, even in a non-heating region, heat energy can be transferred indirectly by a method in which heat energy is transferred by the heated fluid, or heat energy is transferred by an adjacent heating unit.

The heating regions (130) of the reaction device (10) may each independently receive heat energy by the plurality of heating units. In this way, the heat energy transferred to each heating region (130) may be transferred to the fluid flowing through the internal passage (120), thereby heating the fluid. The matter that the fluid is heated in this process means that heat energy is transferred to the fluid, which generally increases the temperature of the fluid.

In the reaction device (10), two or more heating regions may be formed along the fluid stream direction, and it is possible to independently control the amount of heat energy transferred to each heating region. Through this, by optimizing the temperature profile in the internal passage, it is possible to prevent problems (for example, decrease in catalyst activity, etc.) due to the coking phenomenon, and the like.

At least some of or all the plurality of heating units may be so-called electrical heating units. The term electrical heating unit is a unit capable of generating heat from electricity. In such a unit, temperature regulation is relatively free, whereby it is possible to control the temperature profile in the internal passage more precisely.

Such an electrical heating unit may generate heat through direct current or alternate current. When the electrical heating unit is supplied with electrical energy, the electrical energy may be supplied by directly or indirectly connecting a power-supply device (300) to the heating unit (200). If the power-supply device (300) is a direct current power-supply device, the direct current is supplied to the heating unit (200), and if the power-supply device (300) is an alternate current power-supply device, the alternate current is supplied to the heating unit (200). In the reaction device (10), the direct current power-supply device or the alternate current power-supply device may be used as needed.

As is known, the direct current is an electrical current that flows in a constant direction without depending on time, and the alternate current is an electrical current whose magnitude and phase periodically change with time. The direct current power-supply device may provide a voltage that does not depend on time, and the alternate current power-supply device may provide a voltage whose magnitude and phase periodically change with time.

The electrical heating unit may be an electrical direct heating unit, an electrical indirect heating unit, or an induction heating unit. The electrical direct heating unit may generate heat by directly supplying electricity to a heating target. For example, the electrical heating unit may be a pipeline or the above-described surface of the pipeline generating resistance heat or Joule heat by energization. The direct current or alternate current may be applied directly to such a pipeline or surface to generate heat by resistance heat or Joule heat. As described above, the direct current and alternate current may be supplied, as the power-supply device (300) is electrically connected to a portion of the pipeline (100) directly or indirectly.

In this way, when the heating unit (210) is a pipeline or its surface generating heat by energization, the power-supply device (300) may be electrically connected to at least a partial region of the pipeline (100) or its surface. The pipeline (100) or its surface (110) electrically connected to the power-supply device (300) may receive electrical energy from the power-supply device (300) to generate heat. This heat may be transferred to the fluid flowing through the internal passage (120).

In this case, the pipeline or its surface may be formed of a material which has an excellent thermal conductivity to efficiently transfer heat energy to the fluid in the internal passage, and good durability against heat, and allows flow of an electric current, and simultaneously generates resistance heat or Joule heat by the flow of the electric current. Such a material includes nickel, chromium, and/or an alloy containing nickel and chromium, and the like, but is not limited thereto.

In the reaction device of Fig. 1, the heating region (130a) formed by the electrical direct heating unit (210) is illustrated. The alternate current or direct current electricity is supplied from the power-supply device (300) to the surface (110) of the pipeline (100), the surface (110) generates heat, and this heat is received in the heating region (130a), which can be transferred to the fluid flowing through the internal passage (120). By adjusting the amount of electricity supplied from the power-supply device (300), it is possible to adjust the amount of heat.

The electrical indirect heating unit is a unit transferring the heat generated by electricity back to the heating region, rather than a method of generating heat directly in the heating region. Such an electrical indirect heating unit may be an external heat source (410 in Fig. 1) spaced apart from the pipeline (100). The external heat source (410) may generate heat energy from electrical energy by itself. The heat energy generated from such an external heat source is transferred to the pipeline (100), which can heat the fluid flowing through the internal passage (120).

The power-supply device (300) is electrically connected to the external heat source (410) directly or indirectly, which may be supplied with electrical energy. The power-supply device (300) may be a direct current power-supply device or an alternate current power-supply device. Resistance heat or Joule heat may be generated in the external heat source (410) by the electrical energy supplied through the power-supply device (300), and this heat may heat the fluid flowing through the internal passage (120) after being transferred to the heating region (130b). By adjusting the amount of electrical energy supplied from the power-supply device (300), it is possible to adjust the amount of heat.

In the exemplary reaction device (10) of Fig. 1, a heating region (130b) receiving heat generated by the electrical indirect heating unit (410) is shown. The external heat source (410) may also be installed to be capable of transferring heat energy to all surfaces of the pipeline (100) corresponding to the heating region (130b) in a state of being spaced apart from the pipeline (100). For example, the external heat source (410) may also be provided in a form surrounding the pipeline (100) to be capable of transferring heat energy to all surfaces of the pipeline (100) corresponding to the heating region (130b). The structure capable of transferring heat energy to all surfaces of the pipeline (100) is not limited thereto. Such a method can prevent heat energy from being locally transferred to only a specific portion of the fluid flowing through the heating region (130b).

An induction heating unit may perform heating through induced current. For example, the induction heating unit may be a pipeline or its surface generating resistance heat or Joule heat through induced current. For example, such an induction heating unit may be formed by a method of applying electricity, such as alternate current, to a coil wire (500) provided while spirally surrounding the pipeline (100) and being spaced apart therefrom, as exemplarily shown in Fig. 1. The coil wire (500) may be provided in a state of spirally surrounding the pipeline (100) corresponding to the heating region (130d) and being spaced apart therefrom. The coil wire (500) may be connected to the power-supply device (300) so that electricity such as alternate current can flow, where the power-supply device (300) may be an alternate current power-supply device applying alternate current. When the alternate current is applied to the coil wire (500), the induced current is generated on the surface (110) of the pipeline (100) due to an electromagnetic induction phenomenon. Due to the generated induced current, resistance heat or Joule heat is generated on the surface (110) of the pipeline (100), and the generated resistance heat or Joule heat is transferred to the heating region (130d), whereby it can heat the fluid flowing in the internal passage (120) of the pipeline (100).

In this case, the pipeline (100) or its surface (110) may be applied by selecting a material in which the induced current is generated by the coil wire (500), and resistance heat or Joule heat is generated by the induced current. For example, the pipeline (100) or its surface (110) may be made of a material such as nickel, chromium, or an alloy containing nickel and chromium, but is not limited thereto. By adjusting the amount of electrical energy supplied from the power-supply device (300), it is possible to adjust the intensity or degree of the resistance heat or Joule heat. In the above case, the intensity of the induced current can also be adjusted through the number of turns of the coil wire (500), the predetermined distance spaced apart from the pipeline (100), and/or the material of the coil wire (500), and the like.

Such electrical heating units can relatively freely and precisely adjust the degree of the generated heat, and accordingly, can more precisely control the temperature profile in the internal passage.

The heating unit may comprise only the electrical heating unit or, if required, a traditional heating unit may also be used. For example, among the heating units (230) that may be included in the reaction device (10), a heat source converting fossil energy into heat energy may also be included as an external heat source (420) provided in a state of being spaced apart from the pipeline (100). The heat energy converted by the external heat source may be transferred to the pipeline (100) to heat the fluid flowing in the internal passage (120) of the pipeline (100). Such an external heat source (420) can generate heat energy using coal, petroleum, or other fuels as a raw material. The generated heat energy may be received by the heating region (130c) to be transferred to the fluid flowing in the internal passage (120). In addition, by adjusting the injected amount of the raw material, and the like, it is possible to adjust the intensity of the heat energy.

Referring to Fig. 1, at least one heating unit (230), which is one of predetermined methods of generating heat energy transferred to the heating region (130c), is an external heat source (420) provided while being spaced apart from the pipeline (100), where the external heat source (420) can be confirmed as an example of converting fossil energy into heat energy. The external heat source (420) may be provided to be capable of transferring heat energy to all surfaces of the pipeline (100) corresponding to the heating region (130c) while being spaced apart from the pipeline (100). For example, the external heat source (420) may be provided in a form surrounding the pipeline (100) so that heat energy is directly transferred to all surfaces of the pipeline (100) corresponding to the heating region (130c). However, it is not limited to such a structure if heat energy can be transferred to all surfaces of the corresponding pipeline (100). In this way, when the external heat source (420) is configured so that heat energy is transferred to all surfaces of the pipeline (100) corresponding to the heating region (130c), it is possible to prevent formation of uneven heating, in which heat energy is transferred to the fluid flowing in the heating region (130c) only at a specific location.

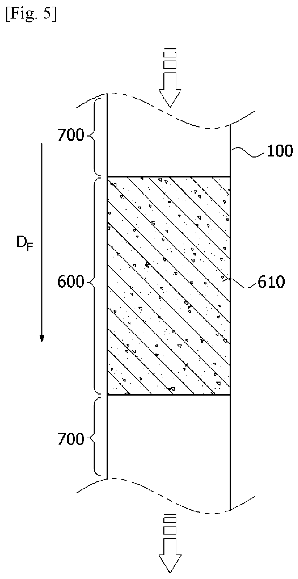

The pipeline may comprise a catalyst section. Such a catalyst section may exist in the internal passage. The term catalyst section is a region of the internal passage where a catalyst is present. Fig. 5 shows one example of a reaction device (10) comprising a catalyst section (600) formed by filling the internal passage of the pipeline (100) with a catalyst (610). while the fluid passes through such a catalyst section (600), the desired reaction may proceed.

As the catalyst, an appropriate catalyst may be selected and used in consideration of the desired reaction. For example, a known endothermic reaction catalyst may be applied for the above-described reforming reaction. The endothermic reaction catalyst is a catalyst that catalyzes an endothermic reaction. Such a catalyst may include, for example, a known DRM reaction catalyst, and an example thereof includes a nickel catalyst and/or a noble metal (e.g., Rh, Ru and Pt, etc.) catalyst, and the like, but is not limited thereto.

The length of the catalyst section may be controlled depending on the purpose. For example, the ratio $L_C/L_P$ of the length $L_C$ of the catalyst section to the length $L_P$ of the pipeline may be adjusted. For example, the lower limit of the ratio $L_C/L_P$ may be 0.3, 0.35, 0.4, 0.45, 0.5, 0.55, 0.6, 0.65, 0.7, 0.75, or 0.8 or so, and the upper limit thereof may be 1, 0.95, 0.9, 0.85, 0.8, 0.75, 0.7, or 0.65 or so. The ratio $L_C/L_P$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

The catalyst section may be provided continuously along the fluid stream direction. That is, the catalyst section may be a continuous catalyst section. The continuous catalyst section means a case where a catalyst exists throughout the catalyst section. For example, if there is no section in which no catalyst exists between the point where the fluid first contacts the catalyst and the point where the fluid last contacts the catalyst in the pipeline along the fluid stream direction, this case may be the continuous catalyst section. Such a continuous catalyst section is illustrated in Fig. 5.

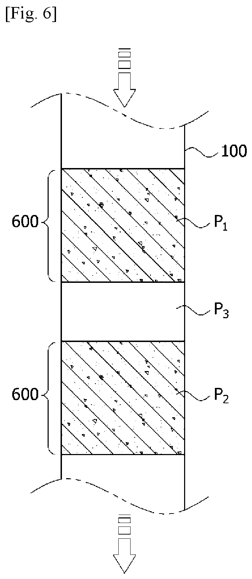

On the contrary, the case illustrated in Fig. 6 is a discontinuous catalyst section. For example, if there is a section in which no catalyst exists between the point where the fluid first contacts the catalyst and the point where the fluid last contacts the catalyst in the pipeline along the fluid stream direction, it may be a discontinuous catalyst section. Fig. 6 shows an example of such a discontinuous catalyst section (600), where when any one point ($P_1$) and any another point ($P_2$) in the catalyst section (600) have been selected, a portion ($P_3$) without any catalyst exists therebetween.

In the pipeline (100) of the reaction device (10), a non-catalyst section (700) may exist together with the catalyst section (600) (Fig. 5). That is, the reaction device (10) may comprise only a catalyst section, or may also comprise a non-catalyst section in which no catalyst is present, if the above-described ratio $L_C/L_P$ is satisfied.

For example, as shown in Fig. 5, the pipeline (100) may sequentially comprise a non-catalyst section (700) and a catalyst section (600) along the fluid stream direction (DF).

In such a constitution, the process can be performed so that the fluid first enters the non-catalyst section (700), and then subsequently enters the catalyst section (600) in the reaction process to be described below. Through such a method, it is possible to prevent undesirable excessive environmental changes (for example, changes in temperature and/or pressure) due to a high partial pressure and a high concentration of the reaction target material contained in the fluid during the reaction process. As illustrated in Figs. 5 and 6, if the non-catalyst section (700) is formed after the catalyst section (600), it is also possible to prevent excessive environmental changes (e.g., changes in temperature and/or pressure) due to reaction products.

In this specification, in such a case, the non-catalyst section (700) located ahead of the catalyst section (600) along the fluid stream direction (DF) can be referred to as a first non-catalyst section, and the non-catalyst section (700) located behind the catalyst section (600) can be referred to as a second non-catalyst section.

The total length ($L_P$) of the pipeline (100) can be appropriately designed depending on, for example, the type and inflow amount of the reaction target material, and the like, which is not particularly limited. For example, the lower limit of the length $L_P$ may be 5 m, 6 m, 7 m, 8 m, 9 m, 11 m, or 12 m or so, and the upper limit thereof may be 100 m, 90 m, 80 m, 70 m, 60 m, 50 m, 40 m, 30 m, 20 m, 19m, 18 m, 17 m, 16 m, 15 m, 14 m, 13 m, 12 m, 11.9 m, 11.8 m, 11.7 m, 11.6 m, 11.5 m, 11.4 m, 11.3 m, or 11.2 m or so. The length $L_P$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

For example, here, the lower limit of the ratio $L_{NC1}/L_P$ of the length $L_{NC1}$ of the first non-catalyst section to the length $L_P$ of the pipeline may be 0.01, 0.05, 0.1, 0.3, 0.5, 0.7, or 0.9 or so, and the upper limit thereof may be 0.9, 0.8, 0.7, 0.6, 0.5, 0.4, 0.3, 0.28, 0.26, 0.24, 0.22, or 0.2 or so. The ratio $L_{NC1}/L_P$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

When the length ($L_{NC1}$) of the first non-catalyst section in the pipeline (100) and the length ($L_C$) of the catalyst section (600) are determined, the length ($L_{NC2}$) of the second non-catalyst section in the pipeline (100), if present, can be set as the length value obtained by subtracting the length ($L_{NC1}$) of the first non-catalyst section and the length ($L_C$) of the catalyst section (600) from the total length of the pipeline (100).

In the catalyst section (600) of the reaction device (10), the catalyst (610) may be uniformly distributed throughout the catalyst section (600), or may be distributed non-uniformly.

In the catalyst section (600) of the reaction device (10), the catalyst (610) may be formed as a fluidized bed or a fixed bed.

In the exemplary reaction device (10), the catalyst section (600) may be divided into a reaction start section (600a) and a reaction continuation section (600b). The reaction start section (600a) may be, for example, from the point where the catalyst section (600) starts along the fluid stream direction (DF) to the point with the lowest internal temperature within the point that is 50% of the length of the catalyst section (600). In addition, the reaction continuation section (600b) may be from the point of the catalyst section (600) where the reaction start section (600a) ends to the point where the catalyst section (600) ends.

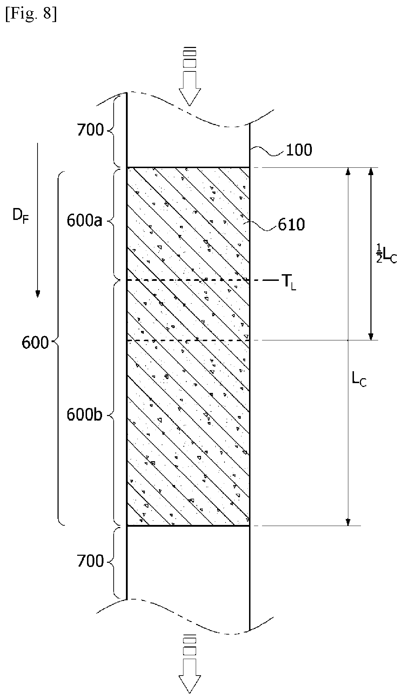

Referring to Fig. 8, it is possible to confirm $1/2L_C$, which is 50% of the length of the catalyst section (600) along the fluid stream direction (DF). As described above, the reaction start section (600a) may be up to the point where the center temperature is lowest (for example, the $T_L$ point) within the range from the point where the catalyst section (600) starts to the $1/2L_C$ point. The reaction continuation section (600b) may be from the point $T_L$ to the point where the catalyst section (600) ends.

In the reaction device (10), the non-catalyst section (700), the reaction start section (600a), and the reaction continuation section (600b) each have at least one or more heating regions (130), where the heating regions (130) may each independently receive heat energy. The method of receiving the heat energy can be referred to the above-described matters.

In the exemplary reaction device (10), one of one or more heating regions (130) in the reaction start section (600a) may receive the highest heat energy among the heating regions (130) of the entire pipeline (100). To suppress the conditions under which the coking phenomenon occurs at a maximum, the reaction device (10) may perform detailed temperature control so that one of one or more heating regions (130) in the reaction start section (600a) receives the highest heat energy among the heating regions (130) of the entire pipeline (100).

With the temperature control according to the above, the reaction device (10) may prevent the formation of the cold spot considering that the key reaction is an endothermic reaction, and may prevent the phenomenon of lowering the temperature to the temperature at which the coking phenomenon occurs even if the cold spot is formed. In addition, with the temperature control according to the above, it is possible to prevent a rapid temperature increase due to the reaction rate decrease of the reaction target material. That is, as the reaction device (10) prevents formation of conditions that cause carbon residue formation due to the Boudouard reaction and carbon residue formation due to the self-decomposition of the organic hydrocarbon compound in the fluid, it is possible to provide a reaction device preventing a decrease in catalyst activities.

That is, the heating units of the reaction device may be installed so that the catalyst section includes a stabilization section above a certain level. The term stabilization section is a region within the catalyst section, which may mean a section controlled so that no substantial change in temperature occurs during the reaction process.

For example, the stabilization section may mean a region where $\Delta T_1$ in Equation 3 below is below a certain level.

$$[\text{Equation 3}]$$

$$\Delta T_1 = T_S/T_{CA} \times 100$$

In Equation 3, $T_{CA}$ is the average temperature of the stabilization section, and $T_S$ is the absolute value of the difference between the temperature $T_i$ at any point within the stabilization section and the $T_{CA}$.

The upper limit of $\Delta T_1$ of Equation 3 above in the stabilization section may be 10%, 9%, 8%, 7%, 6%, 5%, 4%, 3%, 2%, 1.8%, 1.6%, 1.4%, 1.2%, 1%, 0.8%, 0.6%, 0.4%, 0.2%, or 0.1% or so, and the lower limit thereof may be 0%, 0.01%, 0.05%, 0.1%, or 0.15% or so. The $\Delta T_1$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. By forming such a stabilization section within the catalyst section, it is possible to solve problems such as the coking phenomenon.

For example, the above-described reaction continuation section may be the stabilization section. For example, in Equation 3, the $T_{CA}$ may be the average temperature for the section from the point that is 50% of the length of the catalyst section (600) to the point where the catalyst section (600) ends. The average temperature is the average of the center temperatures mentioned at the beginning of this specification. In addition, in Equation 3, Ts may be the absolute value of the difference between $T_i$, which is the center temperature of any one point in the section, measuring the $T_{CA}$, from the point that is 50% of the length of the catalyst section (600) to the point where the catalyst section (600) ends, and the $T_{CA}$. Regarding the center temperature of any one point, $\Delta T_1$ according to Equation 3 may satisfy the above range, even if any point is selected in the section from the point that is 50% of the catalyst section (600) to the point where the catalyst section (600) ends.

For example, the lower limit of the ratio $L_S/L_C$ of the length $L_S$ of the stabilization section formed in the catalyst section to the length $L_C$ of the catalyst section may be 0.2, 0.25, 0.3, 0.35, 0.4, 0.45, or 0.5 or so, and the upper limit thereof may be 1, 0.95, 0.9, 0.85, 0.8, 0.75, 0.7, 0.65, 0.6, or 0.55 or so. The ratio $L_S/L_C$ may also be within a range of equal to or less than, or less than any one of the above-described upper limits; or within a range of equal to or less than, or less than any one of the above-described upper limits while being equal to or more than, or more than any one of the above-described lower limits.

The lower limit of $T_{CA}$ in Equation 3 above may be 750°C, 760°C, 770°C, 780°C, 790°C, 800°C, 805°C, 810°C, 815°C, 820°C, 825°C, or 830°C or so, and the upper limit thereof may be 1,000°C, 950°C, 900°C, 850°C, 845°C, 840°C, or 835°C or so. The temperature $T_{CA}$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

The reaction device, pipeline, or heating units may be installed to satisfy Equation 5 below, and through this, it is possible to further suppress the occurrence of problems such as the coking phenomenon.

$$[\text{Equation 5}]$$

$$T_{NCA} \geq T_{CL}$$

In Equation 5, $T_{NCA}$ is the average temperature of the non-catalyst section, and $T_{CL}$ is the lowest temperature found in the catalyst section. $T_{CL}$ may be, for example, the point with the lowest temperature within the point that is 50% of the length of the catalyst section. For example, in the case of a plurality of non-catalyst sections (700), $T_{NCA}$ in Equation 5 may be the average value of the temperatures of all non-catalyst sections (700).

In relation to Equation 5, the lower limit of the ratio $T_{NCA}/T_{CL}$ of $T_{NCA}$ to $T_{CL}$ in Equation 5 above may be 1, 1.01, 1.02, 1.03, or 1.04 or so, and the upper limit thereof may be 5, 4, 3, 2, 1.9, 1.8, 1.7, 1.6, 1.5, 1.4, 1.3, 1.2, 1.1, 1.09, 1.08, 1.07, 1.06, or 1.05 or so. The ratio may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

The reaction device, pipeline or heating units may be installed to satisfy Equation 6 below, and through this, it is possible to further suppress problems such as the occurrence of the coking phenomenon.

$$[\text{Equation 6}]$$

$$T_{NCH} \geq T_{CH}$$

In Equation 6, $T_{NCH}$ is the highest temperature in the non-catalyst section, and $T_{CH}$ means the highest temperature in the catalyst section. For example, $T_{NCH}$ in Equation 6 above may specifically be the highest center temperature in the first non-catalyst section.

In relation to Equation 6, the lower limit of the ratio $T_{NCH}/T_{CH}$ of $T_{NCH}$ to $T_{CH}$ in Equation 6 above may be 1, 1.01, 1.02, 1.03, or 1.04 or so, and the upper limit thereof may be 5, 4, 3, 2, 1.9, 1.8, 1.7, 1.6, 1.5, 1.4, 1.3, 1.2, 1.1, 1.09, 1.08, 1.07, 1.06, or 1.05 or so. The ratio may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

The reaction device, pipeline or heating units may be formed so that the absolute value of $\Delta R_3$ in Equation 7 below is within a certain range, and through this, it is possible to effectively achieve the desired effect.

[Equation 7]

$$\Delta R_3 = (T_{NCA} - T_{CA})/T_{CA} \times 100$$

In Equation 7, $T_{CA}$ is the average temperature of the stabilization section, and $T_{NCA}$ is the average temperature of the non-catalyst section.

The upper limit of the absolute value of $\Delta R_3$ may be 20%, 18%, 16%, 14%, 12%, 10%, 8%, 6%, 4%, 2%, 1.9%, 1.8%, 1.7%, or 1.6% or so, and the lower limit thereof may be 0%, 0.5%, 1%, or 1.5% or so. The absolute value of $\Delta R_3$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta R_3$ may be a negative number or a positive number.

The reaction device, pipeline or heating units may be formed so that the absolute value of $\Delta R_4$ in Equation 8 below is within a certain range, and through this, it is possible to effectively achieve the desired effect.

[Equation 8]

$$\Delta R_4 = (T_{CH} - T_{CA})/T_{CA} \times 100$$

In Equation 8, $T_{CA}$ is the average temperature of the stabilization section, and $T_{CH}$ is the maximum temperature in the catalyst section.

The upper limit of the absolute value of $\Delta R_4$ may be 20%, 18%, 16%, 14%, 12%, 10%, 8%, or 6% or so, and the lower limit thereof may be 0%, 0.5%, 1%, 1.5%, 2%, 2.5%, 3%, 3.5%, 4%, 4.5%, 5%, or 5.5% or so. The absolute value of $\Delta R_4$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta R_4$ may be a positive number.

The reaction device, pipeline or heating units may be formed so that the absolute value of $\Delta R_5$ in Equation 9 below is within a certain range, and through this, it is possible to effectively achieve the desired effect.

[Equation 9]

$$\Delta R_5 = (T_{CL} - T_{CA})/T_{CA} \times 100$$

In Equation 9, $T_{CA}$ is the average temperature of the stabilization section, and $T_{CL}$ is the lowest temperature in the catalyst section.

The upper limit of the absolute value of $\Delta R_5$ may be 20%, 18%, 16%, 14%, 12%, 10%, 8%, or 6% or so, and the lower limit thereof may be 0%, 0.5%, 1%, 1.5%, 2%, 2.5%, 3%, 3.5%, 4%, 4.5%, 5%, or 5.5% or so. The absolute value of $\Delta R_5$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta R_5$ may be a negative number.

The reaction device, pipeline or heating units may be formed so that the absolute value of $\Delta R_6$ in Equation 10 below is within a certain range, and through this, it is possible to effectively achieve the desired effect.

[Equation 10]

$$\Delta R_6 = (T_{NCH} - T_{CA})/T_{CA} \times 100$$

In Equation 10, $T_{CA}$ is the average temperature of the stabilization section, and $T_{NCH}$ is the maximum temperature in the non-catalyst section.

The upper limit of the absolute value of $\Delta R_6$ may be 20%, 18%, 16%, 14%, 12%, 10%, 8%, or 6% or so, and the lower limit thereof may be 0%, 0.5%, 1%, 1.5%, 2%, 2.5%, 3%, 3.5%, 4%, 4.5%, 5%, or 5.5% or so. The absolute value of $\Delta R_6$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta R_6$ may be a positive number or a negative number.

The reaction device, pipeline or heating units may be formed so that the absolute value of $\Delta R_7$ in Equation 11 below is within a certain range, and through this, it is possible to effectively achieve the desired effect.

[Equation 11]

$$\Delta R_7 = (T_{HCL} - T_{CA})/T_{CA} \times 100$$

In Equation 11, $T_{CA}$ is the average temperature of the stabilization section, and $T_{HCL}$ is the lowest temperature in the non-catalyst section.

The upper limit of the absolute value of $\Delta R_7$ may be 20%, 18%, 16%, 14%, or 12% or so, and the lower limit thereof may be 0%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, or 11% or so. The absolute value of $\Delta R_7$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta R_7$ may be a positive number or a negative number.

In order that the reaction device can be driven as above, the installation form of the heating units can be adjusted.

For example, the heating units may be installed so that $R_1$ in Equation 1 below is within a predetermined range.

[Equation 1]

$$R_1 = L_C/H_I$$

In Equation 1, $L_C$ is the length of the catalyst section, and $H_I$ is the average interval between the heating units. The $L_C$ and $H_I$ have the same unit.

The upper limit of $R_1$ in Equation 1 may be 100, 95, 90, 85, 80, 75, 70, 65, 60, 55, 50, 45, 40, 35, 30, 25, 20, 15, 10, 9, 8, 7, 6, or 5.5 or so, and the lower limit thereof may be 0.5, 1, 1.5, 2, 2.5, 3, 3.5, 4, 4.5, or 5 or so. The $R_1$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

If the above content is satisfied, the intervals between the plurality of heating units may be constant or different. For example, the upper limit of the standard deviation of the intervals between the plurality of heating units may be 10, 9, 8, 7, 6, 5, 4, 3, 2, 1, 0.5, or 0.1 or so, and the lower limit thereof may be 0, 0.1, or 0.5 or so. The standard deviation may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. For example, if there are four heating units and thus there are three intervals ($L_1$, $L_2$, $L_3$) between them, and the average of the intervals is A, the standard deviation is calculated as $[\{(A-L_1)^2+(A-L_2)^2+(A-L_3)^2\}/3]^{0.5}$

For example, the heating units may be installed so that $R_2$ in Equation 2 below is within a predetermined range.

[Equation 2]

$$R_2 = L_C/n$$

In Equation 2, LC is the length of the catalyst section and n is the number of heating units. Here, the unit of length of the catalyst section may be m.

The upper limit of $R_2$ in Equation 2 may be 10, 9, 7, 6, 5, 4, 3, 2, or 1 or so, and the lower limit thereof may be 0.01, 0.05, 0.1, 0.2, 0.3, 0.4, 0.5, 0.6, 0.7, 0.8, or 0.9 or so. The $R_2$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

The heating units thus installed can be driven so that the absolute value of $\Delta T_2$ in Equation 4 below is within a predetermined range.

[Equation 4]

$$\Delta T_2 = (T_{HA} - T_{CA})/T_{CA} \times 100$$

In Equation 4, $T_{HA}$ is the average heating temperature of the heating units, and $T_{CA}$ is the average temperature of the stabilization section.

The average heating temperature of the heating units is the arithmetic mean of the heating temperatures of the respective heating units. In addition, the heating temperature of the heating unit may be the temperature of the heating unit set for heating, or the temperature (center temperature) of the pipeline, internal passage, catalyst section or non-catalyst section achieved by the heating unit.

The upper limit of the absolute value of $\Delta T_2$ in Equation 4 may be 100%, 95%, 90%, 85%, 80%, 75%, 70%, 65%, 60%, 55%, 50%, 45%, 40%, 35%, 30%, 28%, or 26% or so, and the lower limit thereof may be 5%, 10%, 15%, 20%, 21%, 22%, 23%, 24%, or 25% or so. The absolute value of $\Delta T_2$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta T_2$ may be a positive number or a negative number.

The heating unit may be at least present at one or more positions of a starting point of the catalyst section, a midpoint of the catalyst section, and an end point of the catalyst section, and for example, may be present at all the above points.

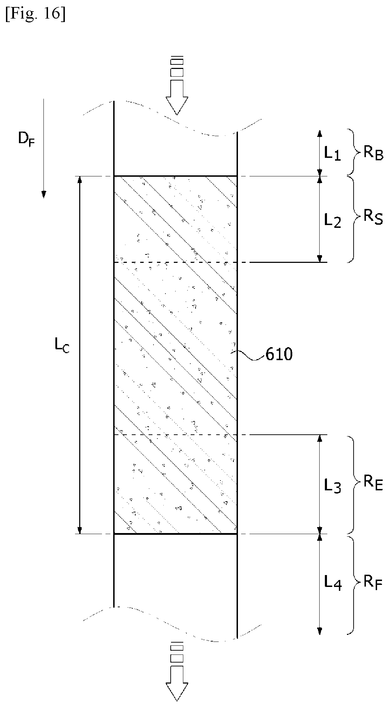

The term starting point of the catalyst section is an arbitrary point within the catalyst section, which means a point that exists within a certain distance from the point where the fluid first contacts the catalyst along the fluid stream direction. For example, referring to Fig. 16, the starting point of the catalyst section is a distance separated by the distance $L_2$ from the starting point of the catalyst region filled with the catalyst (610), which is indicated by $R_S$. The region of the starting point of the catalyst section is a region where the equation $100 \times L_2/L_C$ ($L_C$ is the length of the catalyst section) is 25% or less, 20% or less, 15% or less, 10% or less, 9% or less, or 8% or less while being 0% or more.

The term end point of the catalyst section is an arbitrary point within the catalyst section, which means a point that exists within a certain distance from the point where the fluid last contacts the catalyst along the fluid stream direction. For example, referring to Fig. 16, the end point of the catalyst section is a distance separated by the distance $L_3$ from the end point of the catalyst region filled with the catalyst (610), which is indicated by $R_E$. The region of the end point of the catalyst section is a region where the equation $100 \times L_3/L_C$ ($L_C$ is the length of the catalyst section) is 25% or less, 20% or less, 15% or less, 10% or less, 9% or less, or 8% or less while being 0% or more.

The term midpoint of the catalyst section is an arbitrary point within the catalyst section, which is a region other than the starting point and end point of the catalyst section.

The heating unit may be present at the starting point of the catalyst section, the midpoint of the catalyst section, and the end point within the catalyst section, and one or more may be present at each point.

In this case, the heating units at the respective points may satisfy Equation 13 below considering the desired effect.

[Equation 13]

$$T_{CS} \geq T_{CM} \geq T_{CE}$$

In Equation 13, $T_{CS}$ is the average heating temperature of the heating unit present at the starting point of the catalyst section, $T_{CM}$ is the average heating temperature of the heating unit present at the midpoint of the catalyst section, and $T_{CE}$ is the average heating temperature of the heating unit present at the end point of the catalyst section.

In the above case, the heating units can be driven so that the absolute value of $\Delta T_3$ in Equation 14 below and the absolute value of $\Delta T_3$ in Equation 15 below are within predetermined ranges.

$$[\text{Equation 14}]$$

$$\Delta T_3 = (T_{CM} - T_{CS})/T_{CS} \times 100$$

$$[\text{Equation 15}]$$

$$\Delta T_4 = (T_{CE} - T_{CM})/T_{CM} \times 100$$

In Equations 14 and 15, $T_{CS}$ is the average heating temperature of the heating unit present at the starting point of the catalyst section, $T_{CM}$ is the average heating temperature of the heating unit present at the midpoint of the catalyst section, and $T_{CE}$ is the average heating temperature of the heating unit present at the end point of the catalyst section.

The lower limit of the absolute value of $\Delta T_3$ in Equation 14 may be 1%, 5%, 10%, 15%, or 20% or so, and the upper limit thereof may be 150%, 140%, 130%, 120%, 110%, 100 %, 90%, 80%, 70%, 60%, 50%, 40%, 30%, or 25% or so. The absolute value of $\Delta T_3$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta T_3$ may be a negative number.

The lower limit of the absolute value of $\Delta T_4$ in Equation 15 may be 0.5%, 1%, 3%, 5%, or 7% or so, and the upper limit thereof may be 150%, 140%, 130%, 120%, 110%, 100%, 90%, 80%, 70%, 60%, 50%, 40%, 30%, 25%, 20%, 15%, 10%, 9%, or 8% or so. The absolute value of $\Delta T_4$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta T_4$ may be a negative number.

When two or more plural heating units exist at any one point of the starting point of the catalyst section, the midpoint of the catalyst section, and the end point of the catalyst section, at the starting point of the catalyst section, the heating temperatures of the heating units present at the starting point of the catalyst section may gradually increase, and the heating temperatures of the heating units present at the midpoint and the end point of the catalyst section may gradually decrease, along the fluid stream direction.

For example, when the plurality of heating units exists at the starting point of the catalyst section, the temperature change rate between the heating units is a positive number, and simultaneously the upper limit of the absolute value may be 100%, 90%, 80%, 70%, 60%, 50%, 40%, 30%, 20%, 15%, 10%, 8%, 6%, 4%, or 2% or so, and the lower limit thereof may be 0.5%, 1%, 3%, 5%, 7%, 9%, 11%, or 13% or so. The absolute value of the change rate may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The change rate of the heating temperature is calculated as $100 \times (H_2-H_1)/H_1$, where $H_1$ is the temperature of the heating unit forming the heating region where the fluid first encounters along the fluid stream direction, and $H_2$ is the heating temperature of the heating unit immediately following the heating unit at heating temperature $H_1$ along the flow direction.

For example, when the plurality of heating units exists at the midpoint and/or the end point of the catalyst section, the temperature change rate between the heating units is a negative number, and simultaneously the upper limit of the absolute value may be 100%, 90%, 80%, 70%, 60%, 50%, 40%, 30%, 20%, 15%, 10%, 8%, 6%, 4%, or 2% or so, and the lower limit thereof may be 0.5%, 1%, 3%, 5%, 7%, 9%, 11%, or 13% or so. The absolute value of the change rate may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The change rate of the heating temperature is calculated as $100 \times (H_2-H_1)/H_1$, where $H_1$ is the temperature of the heating unit forming the heating region where the fluid first encounters along the fluid stream direction, and $H_2$ is the heating temperature of the heating unit immediately following the heating unit at heating temperature $H_1$ along the flow direction.

The heating unit may further be present at a point before the catalyst section.

The term point before the catalyst section is an arbitrary point in the non-catalyst section before the fluid enters the catalyst section along the fluid stream direction, which means a point that exists within a certain distance from the point where the fluid first contacts the catalyst along the fluid stream direction. For example, referring to Fig. 16, the point before the catalyst section is a distance separated by the distance $L_1$ from the starting point of the catalyst region filled with the catalyst (610), which is indicated by $R_B$. The region of the point before the catalyst section may be a region where the lower limit of the value of the equation $100 \times L_1/L_C$ ($L_C$ is the length of the catalyst section) is 0%, 5%, or 10%, and the upper limit thereof is 25%, 20%, 15%, 10%, 9%, or 8%. The value of $100 \times L_1/L_C$ ($L_C$ is the length of the catalyst section) defining the point before the catalyst section may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

In this case, the heating unit may be formed to satisfy Equation 16 below.

$$[\text{Equation } 16]$$

$$T_{CS} \geq T_{NS}$$

In Equation 16, $T_{CS}$ is the average heating temperature of the heating unit present at the starting point of the catalyst section, and $T_{NS}$ is the average heating temperature of the heating unit at the point before the catalyst section.

In this case, $\Delta T_5$ in Equation 17 below may be within a predetermined range.

$$[\text{Equation } 17]$$

$$\Delta T_5 = (T_{CS} - T_{NS})/T_{NS} \times 100$$

The lower limit of the absolute value of $\Delta T_5$ in Equation 17 may be 1%, 5%, 10%, 15%, or 20% or so, and the upper limit thereof may be 150%, 140%, 130%, 120%, 110%, 100 %, 90%, 80%, 70%, 60%, 50%, 40%, 30%, or 25% or so. The absolute value of $\Delta T_5$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta T_5$ may be a positive number.

For example, when the plurality of heating units exists at the point before the catalyst section, the temperature change rate between the heating units is a positive number, and simultaneously the upper limit of the absolute value may be 100%, 90%, 80%, 70%, 60%, 50%, 40%, 30%, 20%, 15%, 10%, 8%, 6%, 4%, or 2% or so, and the lower limit thereof may be 0.5%, 1%, 3%, 5%, 7%, 9%, 11%, or 13% or so. The absolute value of the change rate may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The change rate of the heating temperature is calculated as $100 \times (H_2-H_1)/H_1$, where $H_1$ is the temperature of the heating unit forming the heating region where the fluid first encounters along the fluid stream direction, and $H_2$ is the heating temperature of the heating unit immediately following the heating unit at heating temperature $H_1$ along the flow direction.

The heating unit may further be present even at a point after the catalyst section.

The term point after the catalyst section is an arbitrary point in the non-catalyst section after the fluid has passed through the catalyst section along the fluid stream direction, which means a point that exists within a certain distance from the point where the fluid last contacts the catalyst along the fluid stream direction. For example, referring to Fig. 16, the point after the catalyst section is a distance separated by the distance $L_4$ from the end point of the catalyst section filled with the catalyst (610), which is indicated by $R_F$. The region of the point after the catalyst section may be a region where the lower limit of the value of the equation $100 \times L_4/L_C$ ($L_C$ is the length of the catalyst section) is 0%, 5%, 10%, 15%, 20%, or 25%, and the upper limit thereof is 50%, 45%, 40%, 35%, 30%, 25%, 20%, 15%, 10%, 9%, or 8%. The value of $100 \times L_4/L_C$ ($L_C$ is the length of the catalyst section) defining the point after the catalyst section may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits.

In the above case, the heating unit can be driven to satisfy Equation 18 below.

[Equation 18]

$$T_{CE} \geq T_{NE}$$

In Equation 18, $T_{CE}$ is the average heating temperature of the heating unit present at the end point of the catalyst section, and $T_{NE}$ is the average heating temperature of the heating unit at the point after the catalyst section.

In this case, $\Delta T_6$ in Equation 19 below may be within a predetermined range.

[Equation 19]

$$\Delta T_6 = (T_{NE} - T_{CE})/T_{CE} \times 100$$

In Equation 18, $T_{CE}$ is the average heating temperature of the heating unit present at the end point of the catalyst section, and $T_{NE}$ is the average heating temperature of the heating unit at the point after the catalyst section.

The lower limit of the absolute value of $\Delta T_6$ in Equation 19 may be 0.5%, 1%, 1.5%, or 2% or so, and the upper limit thereof may be 50%, 45%, 40%, 35%, 30%, 25%, 20%, 15%, 10%, 5%, 4%, 3%, or 2.5% or so. The absolute value of $\Delta T_6$ may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The $\Delta T_6$ may be a negative number.

For example, when the plurality of heating units exists at the point after the catalyst section, the temperature change rate between the heating units is a negative number, and simultaneously the upper limit of the absolute value may be 100%, 90%, 80%, 70%, 60%, 50%, 40%, 30%, 20%, 15%, 10%, 8%, 6%, 4%, 2%, or 1.5% or so, and the lower limit thereof may be 0.5%, 1%, 1.5%, or 2% or so. The absolute value of the change rate may also be within a range of equal to or more than, or more than any one of the above-described lower limits; within a range of equal to or less than, or less than any one of the above-described upper limits; or within a range of equal to or less than, or less than any one of the above-described upper limits while being equal to or more than, or more than any one of the above-described lower limits. The change rate of the heating temperature is calculated as $100 \times (H_2 - H_1)/H_1$, where $H_1$ is the temperature of the heating unit forming the heating region where the fluid first encounters along the fluid stream direction, and $H_2$ is the heating temperature of the heating unit immediately following the heating unit at heating temperature $H_1$ along the flow direction.

The desired effect can be achieved by applying such a reaction device.

This specification also discloses a reaction method using the above reaction device.

The method is a method of performing a reaction using the above-described reaction device, which may comprise transferring heat energy to the internal passage of the pipeline using the plurality of heating units each independently, while moving a fluid containing a reaction target material to the internal passage.

In this instance, contents about the reaction device and reaction target material, and fluid, and the like are as described above.

Therefore, it may comprise the carbon dioxide, as described above, may be substantially free of water, and may comprise the above-described organic hydrocarbon compound.

Also, as described above, in the reaction process, the heating units may be driven so that the catalyst section includes a stabilization section above a certain level. In this instance, specific details about the stabilization section, for example, the range of $\Delta T_1$ in Equation 3 above, the range of the ratio $L_S/L_C$ of the length $L_S$ of the stabilization section to the length $L_C$ of the catalyst section, the range of $T_{CA}$ in Equation 3 above, and the like are as described above.

In addition, upon the reaction, the reaction device, pipeline, or heating units may be driven so that Equation 5 above is satisfied and, if necessary, the range of the ratio $T_{NCA}/T_{CL}$ of $T_{NCA}$ to $T_{CL}$ in Equation 5 above is the same as the above-described content.

Furthermore, upon the reaction, the reaction device, pipeline, or heating units may be driven so that Equation 6 above is satisfied and, if necessary, the range of the ratio $T_{NCH}/T_{CH}$ of $T_{NCH}$ to $T_{CH}$ in Equation 6 above is the same as described above.

Also, if necessary, the reaction device, pipeline or heating units may be driven so that the value of $\Delta R_3$ in Equation 7 above is in the above-described range.

In addition, if necessary, the reaction device, pipeline or heating units may be driven so that the value of $\Delta R_4$ in Equation 8 above is in the above-described range.

Furthermore, if necessary, the reaction device, pipeline or heating units may be driven so that the value of $\Delta R_5$ in Equation 9 above is in the above-described range.

Also, if necessary, the reaction device, pipeline or heating units may be driven so that the value of $\Delta R_6$ in Equation 10 above is in the above-described range.

In addition, if necessary, the reaction device, pipeline or heating units may be driven so that the value of $\Delta R_7$ in Equation 11 above is in the above-described range.

Furthermore, the heating units in the reaction device may be installed so that the value of $R_1$ in Equation 1 above is in the above-described range, where the standard deviation of the intervals between the heating units may also be within the above-described range.

Also, the heating units in the reaction device may be installed so that the value of $R_2$ in Equation 2 above is in the above-described range.

In addition, the heating units in the reaction device may be driven so that the value of $\Delta T_2$ in Equation 4 above is in the above-described range.

Furthermore, the heating units in the reaction device may be driven so that Equation 13 above is satisfied, and, if necessary, the value of $\Delta T_3$ in Equation 14 above and/or $\Delta T_4$ in Equation 15 above is in the above-described range.

When two or more plural heating units are present at any one of the starting point of the catalyst section, the midpoint of the catalyst section, and/or the end point of the catalyst section, they may be driven so that the temperature change rate of the heating units is in the above-described range depending on the point.

In addition, the heating units in the reaction device may be driven to satisfy Equation 16 above, and, if necessary, may be driven so that the value of $\Delta T_5$ in Equation 17 above is in the above-described range.

When two or more plural heating units exist at the point before the catalyst section, they may be driven so that the temperature change rate of the heating units is in the above-described range depending on the point.

In addition, the heating units in the reaction device may be driven so that Equation 18 above is satisfied, and, if necessary, the value of $\Delta T_6$ in Equation 19 above is in the above-described range.

When two or more plural heating units exist at the point after the catalyst section, they may be driven so that the temperature change rate of the heating units is in the above-described range depending on the point.

This specification also discloses a syngas production device. Such a syngas production device may be the above-described reaction device, or may comprise the reaction device. As the reaction device performs the SMR (Steam Methane Reforming) process or the DRM (Dry Reforming of Methane) process, it is possible to produce the desired syngas. Such a reaction device or syngas production device may be a device in which the DRM process is performed, that is, the DRM device, or may be a portion thereof.

**Effects of Invention**

This specification discloses a reaction device, a reaction method using the reaction device, and a use of the reaction device. The reaction device can solve a coking problem capable of occurring in a process of producing syngas even without applying a method, with high cost and high energy consumption, of introducing an excessive amount of water vapor or carbon dioxide. The reaction device can achieve the above object even in a DRM process without applying water vapor. This specification also discloses a reaction method using the reaction device, and a use of the reaction device.

**Brief Description of Drawings**

Fig. 1 is a diagram of an exemplary reaction device.

Fig. 2 is diagrams showing shapes of exemplary pipelines.

Fig. 3 is diagrams showing cross-sectional shapes of exemplary pipelines.

Fig. 4 is diagrams of a pipeline for explaining a heating region.

Fig. 5 is an example of a reaction device including a catalyst section.

Fig. 6 is an example of a reaction device including a catalyst section.

Fig. 7 is a diagram of a pipeline for explaining a center temperature.

Fig. 8 is a diagram of a pipeline for explaining a catalyst section.

Fig. 9 is a diagram for explaining a form provided with external heat sources.

Fig. 10 shows the temperatures of the external heat sources in Example 1.

Fig. 11 is a graph showing temperatures according to the fluid stream direction in the pipeline of Example 1.

Fig. 12 shows the temperature of the external heat sources in Reference Example 1.

Fig. 13 is a graph showing the temperatures according to the fluid stream direction in the pipeline of Reference Example 1.

Fig. 14 shows the temperatures of the external heat sources in Reference Example 2.

Fig. 15 is a graph showing the temperatures according to the fluid stream direction in the pipeline of Reference Example 2.

Fig. 16 is a diagram for explaining the point before the catalyst section, the starting, middle, and end points of the catalyst section, and the point after the catalyst section.

**Mode for practicing the Invention**

Hereinafter, the reaction device disclosed in this specification, and the like will be described in more detail through Examples and Reference Examples, but the scope of the reaction device, and the like is not limited by the contents presented below.

**Example 1.**

The results were derived by implementing the following reaction device.

A straight pipeline (100) with a total length (L) of about 12 m or so and a circular cross section (left side form in Fig. 3) was used. A catalyst section was formed by continuously filling a fixed bed DRM (Dry Reforming of Methane) catalyst from a point corresponding to a distance separated by 2.4 m or so from one point ($P_X$) at the end of the pipeline (100) to a portion corresponding to a point separated by about 10 m or so from the point ($P_X$). As the catalyst, Ni-doped perovskite metal oxide was used, and the catalyst was uniformly filled throughout the entire catalyst section. The internal passage of the pipeline (100) that is not filled with the catalyst is a non-catalyst section.

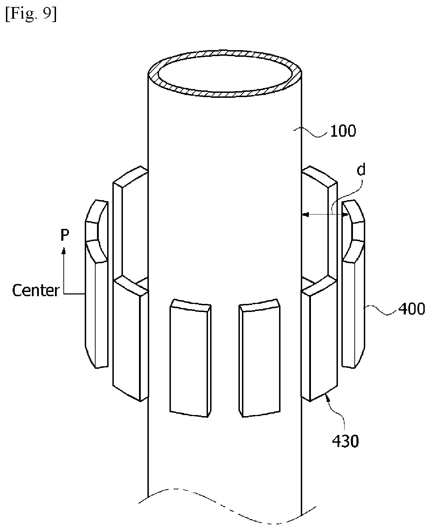

An external heat source (400) was installed in the form of surrounding the pipeline (100) (the form of Fig. 9) at a point (heating source order: 1) corresponding to a distance separated by about 1.5 m or so from the point $P_x$ of the pipeline (100). An electrical indirect heating unit (400) was used as the external heat source. The external heat source was installed so that heating regions (130) were each formed by about 0.2 m (P) side to side based on (Center) a point corresponding to a distance separated by 1.5 m or so from the point $P_x$. In addition, the average separation distance (d) between the external heat source (400) and the surface (110) of the pipeline (100) was set to about 1 m or so. The external heat source (400) was installed to be provided with nine sub-heat sources (430) in the circumferential direction of the pipeline (100). Fig. 9 briefly shows a method for the form of being provided with the external heat source (400).

External heat sources (400) were installed in the same manner at a point (heating source order: 2) separated by 3 m or so, a point (heating source order: 3) separated by 4.5 m or so, a point (heating source order: 4) separated by 6 m or so, a point (heating source order: 5) separated by 7.5 m or so, a point (heating source order: 6) separated by 9 m or so, a point (heating source order: 7) separated by 10.5 m or so, and a point (heating source order: 8) separated by 12 m or so, from the point $P_x$ of the pipeline (100). The respective external heat sources (400) were installed to be capable of transferring heat energy to the pipeline (100) each independently.

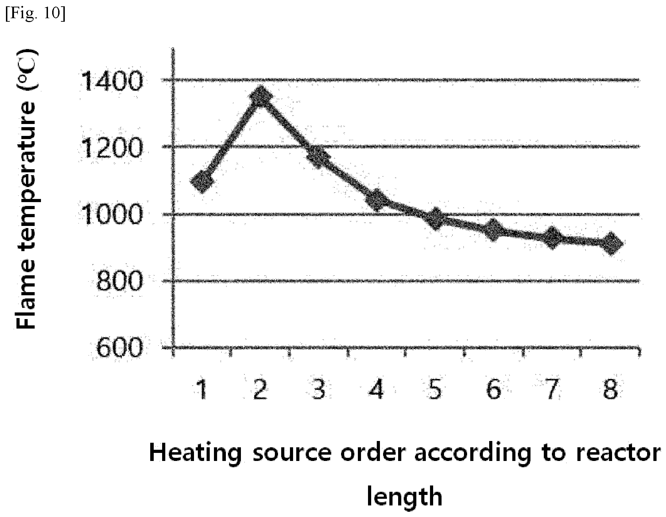

The heating temperatures of the eight external heat sources (400) were controlled in the same form as in Fig. 10, where Fig. 10 shows the temperature at the center portion of the internal passage of the pipeline achieved by each external heat source (400) of Example 1 on the y-axis, and the unit thereof is Celsius (°C). In addition, the x-axis indicates the distance (unit: m) separated from the point $P_x$ of the pipeline (100) with the coordinates set to 0, and the numbers indicate the respective external heat sources. Therefore, the external heat source (400) installed at the point of about 1.5 m or so from the x-axis was indicated as 1, and then the external heat sources installed at the point separated by 3 m or so, the point separated by 4.5 m or so, the point separated by 6 m or so, the point separated by 7.5 m or so, the point separated by 9 m or so, the point separated by 10.5 m or so, and the point separated by 12 m or so, from the point $P_x$ were indicated as 2, 3, 4, 5, 6, 7, and 8, respectively.

As in Fig. 10, the 2 external heat source (400) was set to transfer the most heat energy, where the region corresponding to the relevant portion in the pipeline (100) corresponds to the reaction start section of the catalyst section (or the starting point of the catalyst section).

In a state where the pipeline (100) was stabilized to have the same center temperature distribution as in Fig. 10, the reaction target material obtained by mixing methane ($CH_4$) and carbon dioxide ($CO_2$) in a ratio of 1:1.12 ($CH_4$: $CO_2$) was introduced from the point $P_x$ of the pipeline (100) at 0.07 kg/s.

The pipeline (100) was installed vertically at an angle of 90 degrees from the ground, and the fluid flowed into the pipeline (100) under the influence of gravity. Also, the fluid did not include steam. In addition, the reaction was generally maintained within the range of about 3 barg to 6 barg.

The DRM reaction was performed on the fluid under the same temperature distribution as in Fig. 10. As a result, under the above conditions, the conversion rate of methane ($CH_4$) was about 80% or so in the steady-state of the reaction.

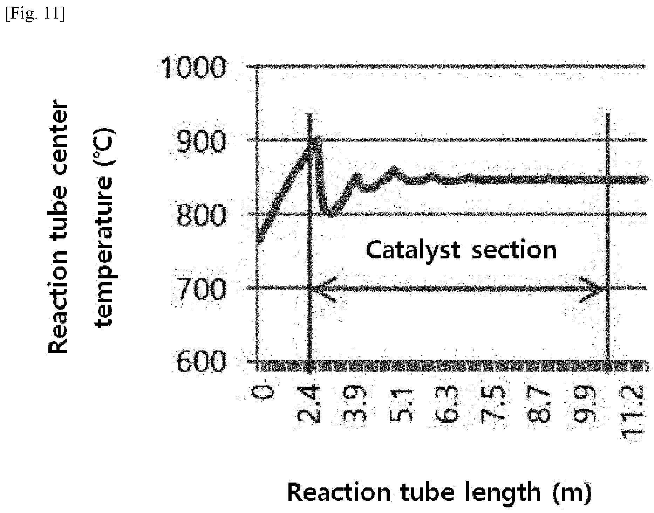

Fig. 11 is a center temperature graph measured at each point along the fluid stream direction ($D_F$) of the pipeline (100) during the reaction process of Example 1. Referring to Fig. 11, it can be confirmed that a stabilization section is formed in the section from the point that is 50% of the length of the catalyst section (600) after the start of the catalyst section (600) to the point where the catalyst section (600) ends. The average center temperature ($T_{CA}$) of the stabilization section was about 850°C or so. For the stabilization section, upon confirming $\Delta T_1$ in Equation 3 (= $T_S/T_{CA} \times 100$, $T_{CA}$ is the average center temperature of the stabilization section, and $T_S$ is the absolute value of the difference between the temperature $T_i$ of any point in the stabilization section and the $T_{CA}$), the value of about 0.2% or less was confirmed. In addition, here, the average center temperature of the non-catalyst section was about 836.7°C or so, the lowest center temperature of the catalyst section was about 800°C or so, the maximum center temperature of the non-catalyst section was about 900°C or so, the maximum center temperature of the catalyst section was about 855°C or so, and the lowest center temperature of the non-catalyst section was about 770°C or so.

**Reference Example 1.**

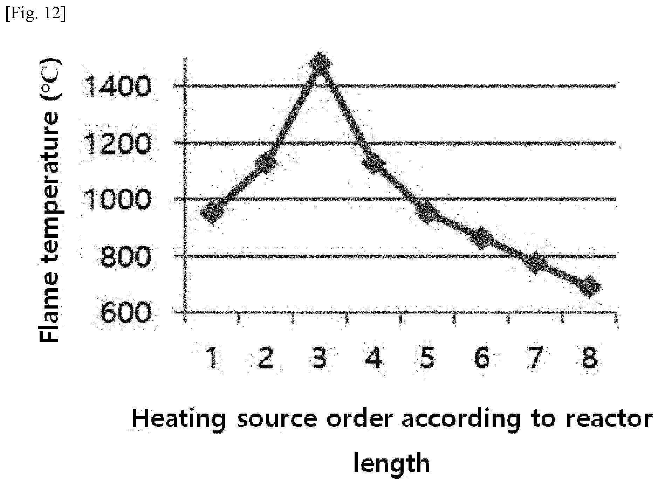

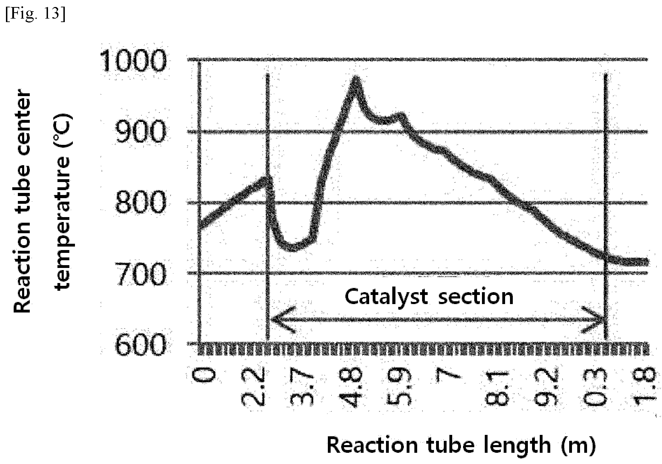

An existing general conventional roof burner was implemented. To implement the same heat energy supply distribution as the time when the roof burner (assuming a non-premixed flame length of 3 m) was applied in a similar state to Example 1, external heat sources (400) were installed as shown in Fig. 12, and heat energy was controlled. Referring to Fig. 12, the 3 external heat source (400) appears to transfer the most heat energy, where the region corresponding to the relevant portion in the pipeline (100) corresponds to the reaction continuation section of the catalyst section. Fig. 13 shows a center temperature graph measured at each point along the fluid stream direction (DF) of the pipeline (100) for Reference Example 1. Referring to Fig. 13, the average center temperature ($T_{CA}$) for the section from the 50% point of the catalyst section (600) to the end point of the catalyst section (600) was about 785°C or so. Also, $\Delta T_1$ in Equation 3 exceeded 2% at a specific point in the section from the 50% point of the catalyst section (600) to the end point of the catalyst section (600). In addition, the average temperature of the non-catalyst section was about 773.3°C or so, the lowest temperature of the catalyst section was about 730°C or so, the maximum temperature of the non-catalyst section was about 830°C or so, and the maximum temperature of the catalyst section was about 970°C or so.

**Reference Example 2.**

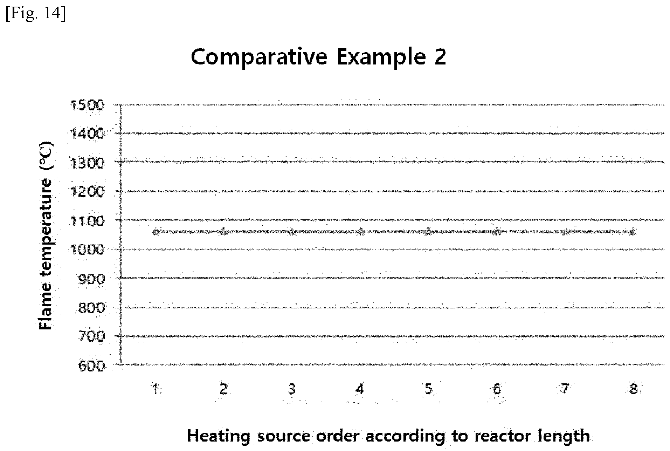

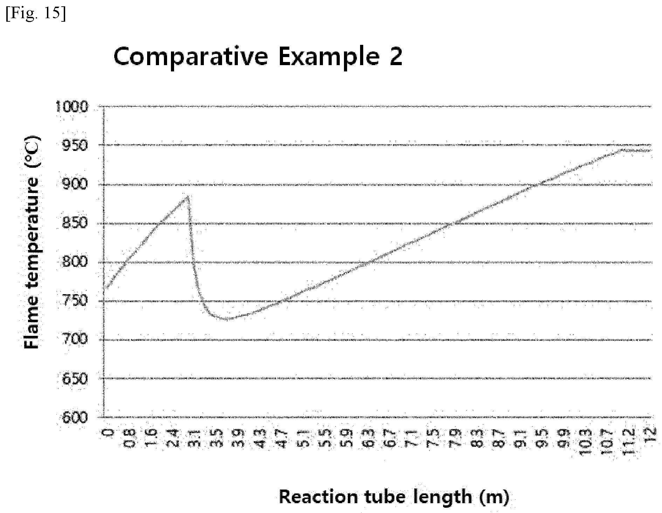

It was the same as Example 1, but the external heat sources (400) were controlled as in Fig. 14 and the heat energy was controlled to be supplied consistently. Fig. 15 shows a center temperature graph measured at each point along the fluid stream direction (DF) of the pipeline (100) for Reference Example 2. Referring to Fig. 15, the average center temperature ($T_{CA}$) for the section from the 50% point of the catalyst section (600) to the end point of the catalyst section (600) was about 875°C or so. Also, $\Delta T_1$ in Equation 3 exceeded 2% at a specific point in the section from the 50% point of the catalyst section (600) to the end point of the catalyst section (600). In addition, the average temperature of the non-catalyst section was about 856.7°C or so, the lowest temperature of the catalyst section was about 740°C or so, the maximum temperature of the non-catalyst section was about 880°C or so, and the maximum temperature of the catalyst section was about 973°C or so.

**Claims**

1. A reaction device comprising:

   a pipeline having an internal passage configured to allow a fluid to flow through the internal passage;
   a catalyst section existing in the internal passage; and
   a plurality of heating units,

   wherein each of the plurality of heating units is configured to transfer heat energy to the internal passage independently.

2. The reaction device according to claim 1, wherein the catalyst section comprises an endothermic reaction catalyst.

3. The reaction device according to claim 1, wherein a ratio $L_C/L_P$ of a length $L_C$ of the catalyst section relative to a length $L_P$ of the pipeline is 0.3 or more.

4. The reaction device according to claim 1, wherein the catalyst section is a continuous catalyst section.

5. The reaction device according to claim 1, wherein the plurality of heating units comprises an electrical heating unit.

6. The reaction device according to claim 5, wherein the electrical heating unit is an electrical direct heating unit, an electrical indirect heating unit or an induction heating unit.

7. The reaction device according to claim 1, wherein the heating units are installed such that a $R_1$ in the Equation 1 below is in a range from 1 to 100:

[Equation 1]

$$R_1 = L_C/H_I$$

wherein the $L_C$ is a length of the catalyst section, and the $H_I$ is an average interval between the heating units.

8. The reaction device according to claim 1, wherein the heating units are installed such that a $R_2$ in the Equation 2 below is in a range from 0.01 to 10:

[Equation 2]

$$R_2 = L_C/n$$

wherein the $L_C$ is a length of the catalyst section and the $n$ is a number of heating units.

9. The reaction device according to claim 1, wherein the heating units are installed such that the catalyst section includes a stabilization section in which a $\Delta T_1$ in the Equation 3 below is 2% or less:

[Equation 3]

$$\Delta T_1 = T_S/T_{CA} \times 100$$

wherein the $T_{CA}$ is an average temperature of the stabilization section, and the $T_S$ is an absolute value of a difference between temperature $T_i$ and the $T_{CA}$, the temperature $T_i$ being temperature at any point within the stabilization section.

10. The reaction device according to claim 9, wherein the heating units are installed such that a ratio $L_S/L_C$ of a length $L_S$ of the stabilization section relative to a length $L_C$ of the catalyst section is 0.2 or more.

11. The reaction device according to claim 9, wherein the $T_{CA}$ is in a range from 750°C to 1,000°C.

12. The reaction device according to claim 9, wherein the heating units are installed such that an absolute value of a $\Delta T_2$ in the Equation 4 below is in a range from 5% to 60%:

[Equation 4]

$$\Delta T_2 = (T_{HA} - T_{CA})/T_{CA} \times 100$$

wherein the $T_{HA}$ is an average heating temperature of the heating units, and the $T_{CA}$ is an average temperature of the stabilization section.

13. The reaction device according to claim 1, wherein the pipeline further comprises a non-catalyst section, and the heating units are installed such that the Equation 5 below is satisfied:

$$[\text{Equation 5}]$$

$$T_{NCA} \geq T_{CL}$$

wherein the $T_{NCA}$ is an average temperature of the non-catalyst section, and the $T_{CL}$ is a lowest temperature of the catalyst section.

14. The reaction device according to claim 1, wherein the pipeline further comprises a non-catalyst section, and the heating units are installed such that Equation 6 below is satisfied:

$$[\text{Equation 6}]$$

$$T_{NCH} \geq T_{CH}$$

wherein the $T_{NCH}$ is a highest temperature of the non-catalyst section, and the $T_{CH}$ is a highest temperature of the catalyst section.

15. The reaction device according to claim 9, wherein the pipeline further comprises a non-catalyst section, and an absolute value of a $\Delta R_3$ in the Equation 7 below is 20% or less:

$$[\text{Equation 7}]$$

$$\Delta R_3 = (T_{NCA} - T_{CA})/T_{CA} \times 100$$

wherein the $T_{CA}$ is an average temperature of the stabilization section, and the $T_{NCA}$ is an average temperature of the non-catalyst section.

16. The reaction device according to claim 9, wherein an absolute value of a $\Delta R_4$ in the Equation 8 below and an absolute value of a $\Delta R_5$ in the Equation 9 below are each 20% or less:

$$[\text{Equation 8}]$$

$$\Delta R_4 = (T_{CH} - T_{CA})/T_{CA} \times 100$$

$$[\text{Equation 9}]$$

$$\Delta R_5 = (T_{CL} - T_{CA})/T_{CA} \times 100$$

wherein the $T_{CA}$ is an average temperature of the stabilization section, the $T_{CH}$ is a maximum temperature in the catalyst section, and the $T_{CL}$ is a lowest temperature in the catalyst section.

17. The reaction device according to claim 9, wherein the pipeline further comprises a non-catalyst section, and an absolute value of a $\Delta R_6$ in the Equation 10 below and an absolute value of a $\Delta R_7$ in the Equation 11 below are each 20% or less:

$$[\text{Equation 10}]$$

$$\Delta R_6 = (T_{NCH} - T_{CA})/T_{CA} \times 100$$

[Equation 11]

$$\Delta R_7 = (T_{CL} - T_{CA})/T_{CA} \times 100$$

wherein, the $T_{CA}$ is an average temperature of the stabilization section, the $T_{NCH}$ is a maximum temperature in the non-catalyst section, and the $T_{HCL}$ is a lowest temperature in the non-catalyst section.

18. The reaction device according to claim 1, wherein the heating units exist at a starting point of the catalyst section, a midpoint of the catalyst section, and an end point of the catalyst section, respectively, and are installed such that

the Equation 12 below is satisfied,
a $\Delta T_3$ in Equation 13 below is a negative number, and its absolute value is in a range from 1% to 150%, and
a $\Delta T_4$ in Equation 14 below is a negative number, and its absolute value is in a range from 0.5% to 150%:

[Equation 12]

$$T_{CS} \geq T_{CM} \geq T_{CE}$$

[Equation 13]

$$\Delta T_3 = (T_{CM} - T_{CS})/T_{CS} \times 100$$

[Equation 14]

$$\Delta T_4 = (T_{CE} - T_{CM})/T_{CM} \times 100$$

wherein, the $T_{CS}$ is an average heating temperature of the heating unit present at the starting point of the catalyst section, the $T_{CM}$ is an average heating temperature of the heating unit present at the midpoint of the catalyst section, and the $T_{CE}$ is an average heating temperature of the heating unit present at the end point of the section.

19. The reaction device according to claim 18, further comprising a heating unit at a point before the catalyst section, wherein it is installed such that

the Equation 15 below is satisfied,
a $\Delta T_5$ in Equation 16 below is a positive number, and its absolute value is in a range from 1% to 150%:

[Equation 15]

$$T_{CS} \geq T_{NS}$$

[Equation 16]

$$\Delta T_5 = (T_{CS} - T_{NS})/T_{NS} \times 100$$

wherein, the $T_{CS}$ is an average heating temperature of the heating unit present at the starting point of the catalyst section, and the $T_{NS}$ is an average heating temperature of the heating unit at the point before the catalyst section.

20. The reaction device according to claim 18, further comprising a heating unit at a point after the catalyst section,

wherein it is installed such that
the Equation 17 below is satisfied,
a $\Delta T_6$ in Equation 18 below is a negative number, and its absolute value is in a range from 0.5% to 50%:

[Equation 17]

$$T_{CE} \geq T_{NE}$$

[Equation 18]

$$\Delta T_6 = (T_{NE} - T_{CE})/T_{CE} \times 100$$

wherein, the $T_{CE}$ is an average heating temperature of the heating unit present at the end point of the catalyst section, and the $T_{NE}$ is an average heating temperature of the heating unit at the point after the catalyst section.

21. A method of performing a reaction using the reaction device of claim 1, comprising:
transferring heat energy to the internal passage independently by using two or more heating units while moving a fluid comprising a reaction target material into the internal passage of the pipeline.

22. The method according to claim 21, wherein the fluid comprises carbon dioxide, does not comprise water, and comprises an organic hydrocarbon compound.

23. The method according to claim 21, wherein the heating units transfer heat energy to the internal passage such that the catalyst section includes a stabilization section in which a $T_1$ in the Equation 3 below is 2% or less:

[Equation 3]

$$\Delta T_1 = T_S/T_{CA} \times 100$$

wherein the $T_{CA}$ is an average temperature of the stabilization section, and the $T_S$ is an absolute value of a difference between temperature $T_i$ and the $T_{CA}$, the temperature $T_i$ being temperature at any point within the stabilization section.

24. The method according to claim 23, wherein a ratio $L_S/L_C$ of a length $L_S$ of the stabilization section relative to a length $L_C$ of the catalyst section is 0.2 or more.

25. The method according to claim 23, wherein $T_{CA}$ is in a range of 750°C to 1,000°C.

26. The method according to claim 23, wherein the heating units transfer heat energy to the internal passage such that an absolute value of a $\Delta T_2$ in the Equation 4 below is in a range of 5% to 60%:

[Equation 4]

$$\Delta T_2 = (T_{HA} - T_{CA})/T_{CA} \times 100$$

wherein, the $T_{HA}$ is an average heating temperature of the heating units, and the $T_{CA}$ is an average temperature of the stabilization section.

27. The method according to claim 21, wherein the pipeline further comprises a non-catalyst section, and the heating units transfer heat energy to the internal passage such that the Equation 5 below is satisfied:

[Equation 5]

$$T_{NCA} \geq T_{CL}$$

wherein, the $T_{NCA}$ is an average temperature of the non-catalyst section, and the $T_{CL}$ is a lowest temperature of the catalyst section.

28. The method according to claim 21, wherein the pipeline further comprises a non-catalyst section, and the heating units transfer heat energy to the internal passage such that the Equation 6 below is satisfied:

[Equation 6]

$$T_{NCH} \geq T_{CH}$$

wherein, the $T_{NCH}$ is a highest temperature of the non-catalyst section, and the $T_{CH}$ is a highest temperature of the catalyst section.

29. The method according to claim 23, wherein the pipeline further comprises a non-catalyst section, and the heating units transfer heat energy to the internal passage such that an absolute value of ΔR3 in Equation 7 below is 20% or less:

[Equation 7]

$$\Delta R_3 = (T_{NCA} - T_{CA})/T_{CA} \times 100$$

wherein, the $T_{CA}$ is an average temperature of the stabilization section, and the $T_{NCA}$ is an average temperature of the non-catalyst section.

30. The method according to claim 23, wherein the heating units transfer heat energy to the internal passage such that an absolute value of a $\Delta R_4$ in the Equation 8 below and an absolute value of a $\Delta R_5$ in the Equation 9 below are each 20% or less:

[Equation 8]

$$\Delta R_4 = (T_{CH} - T_{CA})/T_{CA} \times 100$$

[Equation 9]

$$\Delta R_5 = (T_{CL} - T_{CA})/T_{CA} \times 100$$

wherein, the $T_{CA}$ is an average temperature of the stabilization section, $T_{CH}$ is a maximum temperature in the catalyst section, and $T_{CL}$ is a lowest temperature in the catalyst section.

31. The method according to claim 23, wherein the pipeline further comprises a non-catalyst section, and the heating units transfer heat energy to the internal passage such that an absolute value of a $\Delta R_6$ in the Equation 10 below and an absolute value of a $\Delta R_7$ in the Equation 11 below are each 20% or less:

[Equation 10]

$$\Delta R_6 = (T_{NCH} - T_{CA})/T_{CA} \times 100$$

[Equation 11]

$$\Delta R_7 = (T_{CL} - T_{CA})/T_{CA} \times 100$$

wherein, the $T_{CA}$ is an average temperature of the stabilization section, the $T_{NCH}$ is a maximum temperature in the non-catalyst section, and the $T_{HCL}$ is a lowest temperature in the non-catalyst section.

32. The method according to claim 21, wherein the heating units exist at a starting point of the catalyst section, a midpoint of the catalyst section, and an end point of the catalyst section, respectively, and the heating units transfer heat energy to the internal passage such that

the Equation 12 below is satisfied,
a $\Delta T_3$ in the Equation 13 below is a negative number, and its absolute value is in a range of 1% to 150%, and
a $\Delta T_4$ in the Equation 14 below is a negative number, and its absolute value is in a range of 0.5% to 150%:

$$[\text{Equation 12}]$$

$$T_{CS} \geq T_{CM} \geq T_{CE}$$

$$[\text{Equation 13}]$$

$$\Delta T_3 = (T_{CM} - T_{CS})/T_{CS} \times 100$$

$$[\text{Equation 14}]$$

$$\Delta T_4 = (T_{CE} - T_{CM})/T_{CM} \times 100$$

wherein, the $T_{CS}$ is an average heating temperature of the heating unit present at the starting point of the catalyst section, the $T_{CM}$ is an average heating temperature of the heating unit present at the midpoint of the catalyst section, and the $T_{CE}$ is an average heating temperature of the heating unit present at the end point of the section.

33. The method according to claim 32, further comprising a heating unit at a point before the catalyst section, wherein the heating units transfer heat energy to the internal passage such that

the Equation 15 below is satisfied,
a $\Delta T_5$ in Equation 16 below is a positive number, and its absolute value is in a range of 1% to 150%:

$$[\text{Equation 15}]$$

$$T_{CS} \geq T_{NS}$$

$$[\text{Equation 16}]$$

$$\Delta T_5 = (T_{CS} - T_{NS})/T_{NS} \times 100$$

wherein, the $T_{CS}$ is an average heating temperature of the heating unit present at the starting point of the catalyst section, and the $T_{NS}$ is an average heating temperature of the heating unit at the point before the catalyst section.

34. The method according to claim 32, further comprising a heating unit at a point after the catalyst section, wherein the heating units transfer heat energy to the internal passage such that

the Equation 17 below is satisfied,
a $\Delta T_6$ in Equation 18 below is a negative number, and its absolute value is in a range of 0.5% to 50%:

$$[\text{Equation 17}]$$

$$T_{CE} \geq T_{NE}$$

$$[\text{Equation 18}]$$

$$\Delta T_6 = (T_{NE} - T_{CE})/T_{CE} \times 100$$

wherein, the $T_{CE}$ is an average heating temperature of the heating unit present at the end point of the catalyst section, and the $T_{NE}$ is an average heating temperature of the heating unit at the point after the catalyst section.

**35.** A syngas production device, comprising:
the reaction device according to claim 1.

**36.** A DRM device, comprising:
the reaction device according to claim 1.

[Fig. 1]

[Fig. 2]

(a)

(b)

(c)

[Fig. 3]

[Fig. 4]

(a)

(b)

[Fig. 5]

[Fig. 6]

[Fig. 7]

[Fig. 8]

[Fig. 9]

[Fig. 10]

[Fig. 11]

[Fig. 12]

**Heating source order according to reactor length**

[Fig. 13]

[Fig. 14]

## Comparative Example 2

[Fig. 15]

## Comparative Example 2

[Fig. 16]

## INTERNATIONAL SEARCH REPORT

| | International application No. |
|---|---|
| | **PCT/KR2023/016923** |

### A. CLASSIFICATION OF SUBJECT MATTER

**B01J 8/06**(2006.01)i; **B01J 8/00**(2006.01)i; **B01J 19/00**(2006.01)i; **C01B 3/38**(2006.01)i

According to International Patent Classification (IPC) or to both national classification and IPC

### B. FIELDS SEARCHED

Minimum documentation searched (classification system followed by classification symbols)

B01J 8/06(2006.01); B01J 19/12(2006.01); B01J 8/00(2006.01); B01J 8/02(2006.01); C01B 3/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파이프 (pipe), 촉매 (catalyst), 가열 (heater), 온도 (temperature), 간격 (distance)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0095833 A (DONGYANG INDUCTION MELTING FURNACE CO., LTD.) 11 August 2020 (2020-08-11)<br>See claims 1-6; and figures 1-2. | 1-36 |
| A | KR 10-2020-0093649 A (HALDOR TOPSOE A/S) 05 August 2020 (2020-08-05)<br>See entire document. | 1-36 |
| A | KR 10-2017-0099433 A (HYOSUNG CORPORATION) 01 September 2017 (2017-09-01)<br>See entire document. | 1-36 |
| A | KR 10-2019-0016515 A (HALDOR TOPSOE A/S) 18 February 2019 (2019-02-18)<br>See entire document. | 1-36 |
| A | US 6527980 B1 (RODEN, T. M. et al.) 04 March 2003 (2003-03-04)<br>See entire document. | 1-36 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 February 2024** | **08 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/016923**

| Patent document cited in search report | | | Publication date (day/month/year) | Patent family member(s) | | | Publication date (day/month/year) |
|---|---|---|---|---|---|---|---|
| KR | 10-2020-0095833 | A | 11 August 2020 | KR | 10-2204580 | B1 | 19 January 2021 |
| KR | 10-2020-0093649 | A | 05 August 2020 | EP | 3720594 | A1 | 14 October 2020 |
| | | | | JP | 2021-505516 | A | 18 February 2021 |
| | | | | JP | 7261235 | B2 | 19 April 2023 |
| | | | | US | 2020-0406212 | A1 | 31 December 2020 |
| | | | | WO | 2019-110266 | A1 | 13 June 2019 |
| KR | 10-2017-0099433 | A | 01 September 2017 | KR | 10-1815753 | B1 | 22 February 2018 |
| KR | 10-2019-0016515 | A | 18 February 2019 | EP | 3468706 | A1 | 17 April 2019 |
| | | | | EP | 3468706 | B1 | 27 September 2023 |
| | | | | KR | 10-2441364 | B1 | 08 September 2022 |
| | | | | US | 11213794 | B2 | 04 January 2022 |
| | | | | US | 2019-0151813 | A1 | 23 May 2019 |
| | | | | WO | 2017-211884 | A1 | 14 December 2017 |
| US | 6527980 | B1 | 04 March 2003 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220140787

**Non-patent literature cited in the description**

- **BAK, Y.C** ; **CHO K.J**. Status for the Technology of Hydrogen Production from Natural Gas. *Korean Chem. Eng. Res*, June 2005, vol. 43 (3), 344-351

- **ARMOR, J. N**. The Multiple Roles for Catalysis in the Production of H2. *Applied Catalysis, A: General*, 1999, vol. 176, 159-176